Europäisches Patentamt

European Patent Office

Office européen des brevets

(11) Publication number: **0 220 935**
**A2**

# EUROPEAN PATENT APPLICATION

(21) Application number: 86308215.2

(22) Date of filing: 22.10.86

(51) Int. Cl.⁴: **G 02 B 6/12**

(30) Priority: 30.10.85 US 793088

(43) Date of publication of application:
06.05.87 Bulletin 87/19

(84) Designated Contracting States: **DE FR GB SE**

(71) Applicant: **AMERICAN TELEPHONE AND TELEGRAPH COMPANY**
**550 Madison Avenue**
**New York, NY 10022 (US)**

(72) Inventor: **Lunt, Sharon Ruth**
**35 East Oak Street**
**Basking Ridge New Jersey 07920 (US)**

**Peterson, George Earl**
**21 Spencer Lane**
**Warren New Jersey 07060 (US)**

(74) Representative: **Watts, Christopher Malcolm Kelway, Dr.**
**et al**
**Western Electric Company Limited 5, Mornington Road**
**Woodford Green Essex, IG8 0TU (GB)**

(54) Method for fabricating integrated optical devices.

(57) The disclosed invention involves the finding that the undesirable variation in the quality of integrated optical devices (IODs) produced using current fabrication procedures is due to compositional variations in, and between, the boules used in these procedures. These compositional variations result in refractive index variations which degrade device performance.

The disclosed invention also involves two nondestructive, optical techniques for measuring the refractive index uniformities of the boules and substrates used in fabrication IODs.

FIG. 1

EP 0 220 935 A2

**Description**

METHOD FOR FABRICATING INTEGRATED OPTICAL DEVICES

Background of the Invention

1. Field of the Invention
The invention pertains to a method for fabricating integrated optical devices.

2. Art Background
Integrated optical devices (IODs) are devices used for processing, e.g., switching, amplitude modulating or phase modulating, optical signals. Optical information handling systems, e.g., optical fiber communication systems, employing IODs, have the potential to manipulate more information (carried by light beams), more rapidly than optical and electronic information handling systems employing integrated circuit devices.

IODs include one or more wavepaths (light-guiding regions), and may also include other device components such as optical detectors and optical sources (capable of optical communication with one or more of the wavepaths). These devices are typically fabricated in substrates which include electro-optic or acoustooptic, polar, uniaxial crystalline materials such as single-crystal lithium niobate or single crystal lithium tantalate. (The term polar means each unit cell of the crystalline material has a net, nonzero, electric dipole. The term uniaxial means the material has an axis of symmetry, called the optic axis, i.e., the material properties are azimuthally symmetric with respect to the optic axis.) In the case of an electro-optic substrate, the device wavepaths are typically titanium-diffused regions of the substrate (the titanium serving to increase the local refractive index, which thus permits waveguiding). In the case of an acousto-optic substrate, a thin surface region of the substrate constitutes the wavepath.

In operation, input and output optical signals are typically communicated to and from an IOD by optical transmission media such as optical fibers, which are optically coupled to the device wavepaths. Optical signal processing, e.g., switching between wavepaths, signal amplitude modulation (altering signal amplitudes) or signal phase modulation (altering signal phases), in the IOD is effected by inducing a refractive index change in a localized region of the device substrate. Such a refractive index change is achieved either through application of a voltage (in the case of an electro-optic substrate) across localized electrodes, or through the transmission of a surface acoustic wave (in the case of an acousto-optic substrate). Significantly, the design of an IOD, i.e., the length of, and spacing between, the wavepaths of the device, is based on the assumption that the only variation (from a desired value) in refractive index is that induced by, for example, the applied voltage.

IODs are typically fabricated by first dipping a "seed" into a liquid melt, and drawing a boule of uniaxial, single crystal material from the melt. The melt composition is chosen to yield a boule having (what has been believed to be) a homogeneous composition. After drawing, the boule is typically annealed to eliminate strain. In addition, the boule is poled, i.e., a voltage is applied across the boule, typically toward the end of the annealing process, to align the dipoles of the unit cells. The boule is then sliced, e.g., sawed, into wafers, from which one or more substrates are derived. If a substrate includes, for example, electro-optic material, then the wavepaths of the IOD are formed by depositing a refractive-index- increasing dopant, such as titanium, onto the substrate surface in the pattern desired for the wavepaths. The substrate is then heated to diffuse the dopant into the substrate, resulting in the formation of the wavepaths. Finally, an IOD is completed by a series of well-known, conventional steps, including, for example, electroding (forming electrodes on the substrate) and packaging.

The above-described IOD fabrication procedure has generally yielded useful devices. However, in many instances, this procedure has resulted in low yields due to an undesirably low degree or consistency of switching, amplitude modulation or phase modulation.

The uniaxial crystalline substrates in which IODs are formed exhibit double refraction and are thus characterized by two refractive indices called, respectively, the ordinary refractive index, $n_o$, and the extraordinary refractive index, $n_e$. That is, when unpolarized light, of frequency $\omega$, is incident on a uniaxial, single crystal material, the incident light is generally split into two, plane polarized light beams, also of frequency $\omega$, within the material. One of these beams is refracted in accordance with Snell's law, and is called the ordinary ray (o-ray). The second beam, which undergoes a refraction not governed by Snell's law, is called the extraordinary ray (e-ray). Regardless of propagation direction, the o-ray always "sees" (experiences) the ordinary refractive index, $n_o$, the magnitude of which is dependent on the frequency of the o-ray. By contrast, the refractive index "seen" (experienced) by the e-ray depends on propagation direction, ranging from $n_o$ to $n_e$ (with the magnitude of, for example, $n_o$ or $n_e$ being dependent on the frequency of the e-ray). (Regarding double refraction in uniaxial crystalline materials see, e.g., Francis A. Jenkins and Harvey E. White, Fundamentals of Optics, Third Edition (McGraw-Hill. 1957), pp. 496-499 and pp. 535-553.)

It has been postulated that the relatively large variation in the quality of IODs is due to undesirable variations in the $n_o$ and/or $n_e$ of the device substrates, resulting from strains remaining after annealing, or induced in the substrates during the cutting of the boules. In an attempt to detect the (postulated) strain-induced variations in $n_o$ and/or $n_e$. experiments have been performed in which a relatively low power light beam has been shined onto, and scanned across, the upper surfaces of device substrates. (By relatively low power, it is meant that the power in the incident light beam was insufficient to produce a harmonic optical field within the substrates.)

In these experiments it was assumed that the incident beam would split into an o-ray and an e-ray within the substrates. It was recognized that the relatively large difference between the values of $n_o$ and $n_e$ seen, respectively, by the o- and e-rays would result in these rays taking divergent paths within the substrates, largely precluding any interaction between the rays. However, it was assumed that a strain-induced variation in, for example, $n_e$ would produce a change in the phase difference, $\Delta\varphi$, between the o- and e-rays, which could be detected using conventional phase shifting techniques. Unfortunately, all of the measured changes in $\Delta\varphi$ were completely dominated by the effects of substrate thickness variations, and strain-induced variations in $n_o$ and/or $n_e$, if present, could not be detected.

Thus, those engaged in the development of IODs have sought, thus far without success, the cause (or causes) underlying the undesirable variations in IOD quality, as well as fabrication method which avoids these undesirable quality variations.

Summary of the Invention

We have found that, contrary to currently held beliefs, current fabrication procedures do not yield boules having uniform compositions, and the current, undesirably large variation in IOD quality is largely due to compositional variations in, and between, boules. These compositional variations result in variations in $n_e$ and/or $n_o$ which are often comparable in size to the refractive index changes induced during IOD operation, resulting in significant, and undesirable, variations in device performance.

We have also found that IOD performance is essentially unaffected by variations (from desired values) in $n_e$ and/or $n_o$ less than about 0.01 percent. Substrates meeting this requirement are readily identified by measuring the refractive index uniformity of each substrate, each boule, or representative samples of substrates and/or boules.

We have developed two nondestructive, optical techniques for measuring variations in refractive index. These techniques are largely insensitive to thickness variations, and can readily be used to detect refractive index variations as small as, or smaller than, about 0.005 percent. In one of these techniques, a high power beam of light, e.g., laser light, is impinged upon a boule or a substrate to produce an optical field within the impinged material which includes a fundamental, i.e., an o- or an e-ray, as well as two harmonics of the fundamental. By choosing an appropriate propagation direction, and an appropriate polarization orientation, for the incident light, as well as an appropriate crystallographic surface upon which to impinge the light, the difference in the refractive indices seen by the harmonic waves is sufficiently reduced so that the harmonics interact with one another, i.e., constructively or destructively interfere with one another. By scanning the incident beam along the length of the boule or across the substrate surface, an interference pattern is produced indicative of compositional homogeneity.

In the second technique, the refractive index variation along the surface of a boule or substrate is measured by measuring variations along the surface in the critical angle, i.e., the incidence angle which results in light being coupled into, rather than reflected from, the surface. This is achieved by shining light onto the surface through a prism. The incident light is refracted at the air-prism interface, and reflected at the surface. By varying the incidence angle of the light striking the prism, and monitoring the intensity of the light reflected from the surface, the critical angle is readily determined.

Brief Description of the Drawings

The invention is described with reference to the accompanying drawings, wherein:

FIGS. 1 and 2 depict two optical techniques for measuring the refractive index uniformity of boules and substrates;

FIG. 3 is a schematic diagram of apparatus useful in implementing the optical technique depicted in FIG. 1;

FIG. 4 displays measured results obtained with the apparatus of FIG. 3, when applied to a lithium niobate boule;

FIG. 5 is a schematic diagram of apparatus useful in implementing the optical techniques depicted in FIG. 2; and

FIG. 6 displays measured results obtained with the apparatus of FIG. 5, when applied to a lithium niobate boule.

Detailed Description

The invention involves a fabrication process which yields IODs of uniformly high quality.

As noted, it has been found that the large variability in IOD quality is largely due to compositional variations in, and between, boules. These compositional variations, which occur during the drawing of the boules from the liquid melt, are quite small, typically about 0.2 percent. In fact, these compositional variations are so small that they are generally not detectable with conventional chemical analysis techniques. However, these small compositional variations produce variations in $n_e$ and/or $n_o$ which are often comparable to the refractive index changes induced during IOD operation. For example, in the case of lithium niobate, a percentage variations in the mole ratio of lithium to niobium as small as about 0.8 percent (which constitutes a percentage change in composition of 0.2 percent) results in a corresponding percentage change in $n_e$ of about 0.05 percent ($n_o$ in lithium niobate is essentially unaffected by these small compositional variations). But the refractive index change induced during the operation of an IOD formed in lithium niobate is typically about 0.08 percent. Thus, the compositional refractive index variation is more than half of the induced refractive change, which is highly significant, and disadvantageous, in relation to device operation.

It has further been found that compositional variations which result in percentage variations (from desired values) in $n_e$ and $n_o$ less than about 0.01 percent, and preferably less than or equal to about 0.005 percent, have little or no adverse effect on device operation. Thus, boules and substrates which meet this requirement yield IODs of uniformly high quality.

In the described IOD fabrication process, a boule which includes polar, uniaxial crystalline material, e.g., single crystal lithium niobate, is drawn from a liquid melt, annealed, poled, cut into substrates, and devices formed in the substrates. However, in accordance with one embodiment of the invention, and in contrast to previous processes, devices are only formed in those substrates which meet the above quality requirement, i.e., exhibit percentage variations in $n_e$ and/or $n_o$ less than about 0.01 percent, and preferably less than or equal to about 0.005 percent, with all other substrates being discarded. The undesirable substrates are detected by, for example, nondestructively measuring (as described below) the refractive index variation exhibited by each substrate cut from each boule. Alternatively, only the boules are examined. In yet another alternative, a representative, e.g., a statistically significant, sample of the substrates or of the boules is examined, and devices then formed in all the substrates provided each member of the representative sample meets the above requirement.

In another embodiment of the inventive IOD fabrication process, a device is at least partially formed in a substrate, e.g., one or more waveguides are formed in the substrate, and then the refractive index profile of one or more portions of the substrate nondestructively measured (as described below). The one or more portions include, for example, non-device-bearing portions, or device-bearing portions, or both. Only those substrates exhibiting a refractive index profile which meets a desired criterion undergo further processing, e.g., further device fabrication or electroding and packaging, with all other substrates being discarded. Alternatively, a device is at least partially formed in each of a plurality of substrates, and the refractive index profiles of a representative sample are nondestructively measured. If the measured profiles meet a desired criterion, then each member of the plurality undergoes further processing.

Two nondestructive, optical techniques have been developed for measuring refractive index variations and profiles in substrates and boules. Both techniques are insensitive to variations in the thicknesses of the substrates and boules, and can readily detect variations in refractive index smaller than 0.005 percent.

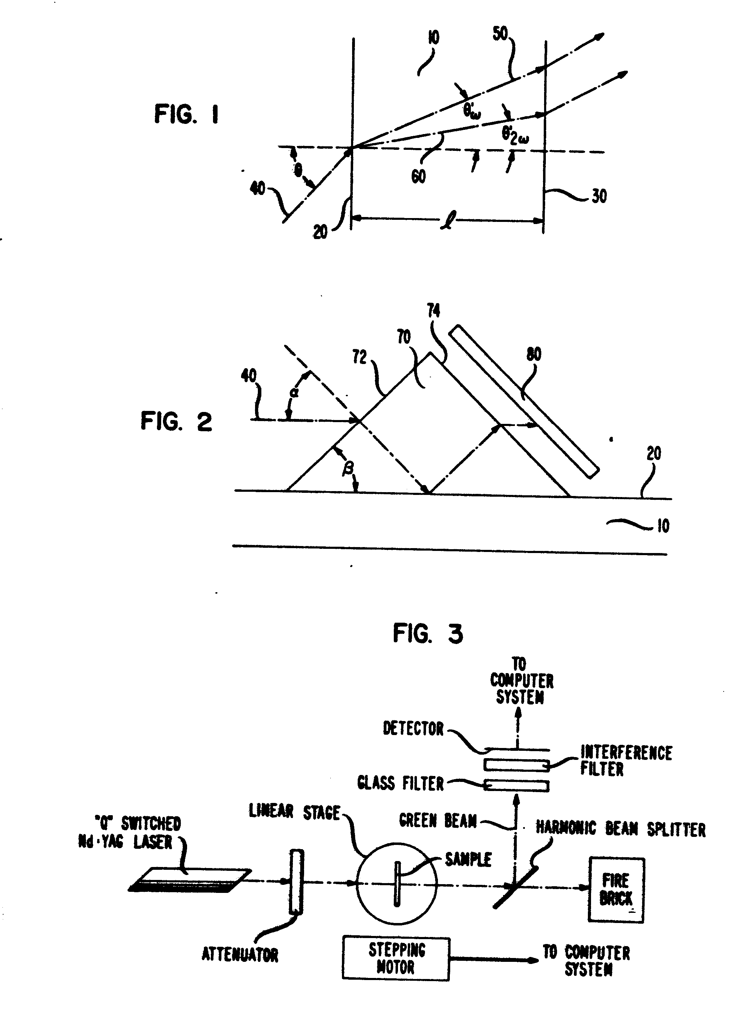

The first of the optical techniques is depicted in FIG. 1. As shown, a beam of light 40, e.g. laser light, of frequency $\omega$, is impinged upon a first surface 20 of a polar, uniaxial, crystalline substrate or boule 10 (hereafter referred to generically as the substrate 10). In general, the incident beam, undergoes double refraction within the substrate 10, i.e. is split into an o-ray and an e-ray (each of which is also of frequency $\omega$). However, by choosing an appropriate direction, and polarization orientation, for the incident light relative to the optic axis of the substrate 10, just the o-ray of just the e-ray is produced within the substrate. (For example, if the direction of the incident light is perpendicular and the polarization orientation of the incident light is parallel to the optic axis, then just an e-ray is generated. If the direction of the incident light is parallel and the polarization of the incident light is perpendicular to the optic axis, then just an o-ray is generated.) For the sake of simplicity, it is here assumed that only an o- or e-ray is produced, and the o-ray or e-ray is hereafter denoted the fundamental (which is of frequency $\omega$).

In contrast to previous techniques, the power of the incident beam 40 is chosen to be sufficiently high to generate (in addition to the fundamental) two harmonic beams 50 and 60, i.e. beams of frequency $2\omega$, within the substrate. (Polar materials exhibit nonlinear optical properties which, at sufficiently high incident optical powers, result in the formation of harmonics.) If the frequency of the incident beam 40 is, for example, in the visible portion of the spectrum, then the power needed to generate the harmonics is readily determined by, for example. increasing the incident optical power until light of a color different from that of the incident beam emerges from the substrate.

One of the two harmonics, denoted by the numeral 50, is called the bound wave because, despite its higher frequency ($2\omega$), its path is bound to that of the lower frequency ($\omega$) fundamental. That is, the refraction angle of the bound wave 50 is equal to that of the fundamental. $\theta'_{\omega}$ (see FIG. 1), because the magnitude of the refractive index "seen" (experienced) by the bound wave is determined by the frequency of the fundamental rather than the frequency of the bound wave. (For example, if the fundamental is an o-ray which experiences $n_o$, then the bound wave will also experience $n_o$. Although the magnitude of $n_o$ is typically dependent on the frequency of the light which experiences $n_o$, the magnitude of $n_o$ experienced by the bound wave is determined by the frequency of the fundamental. and not of the bound wave.)

Depending on the direction, and polarization orientation, of the fundamental relative to the optic axis, the second harmonic 60 sees a refractive index ranging from $n_o$ to $n_e$. Significantly, the second harmonic 60 is not bound to the fundamental, and is thus called the free wave. That is, the magnitude of the refractive index experienced by the free wave, and thus the size of the refraction angle, $\theta'_{2\omega}$ (see FIG. 1), of the free wave, are dependent on the frequency of the free wave.

As noted, the direction and polarization orientation of the incident beam 40, as well as the impinged crystallographic surface of the substrate 10, determines which of the refractive indices ($n_o$ or $n_e$) is seen by each of the harmonics. In addition, the frequency. $\omega$, of the incident beam determines the frequencies of the fundamental ($\omega$) and of the free wave ($2\omega$), and thus determines the magnitudes of the respective refractive indices. Thus, these parameters determine the degree of divergence, and therefore the degree of interaction,

4

i.e., interference, between the bound and free waves.

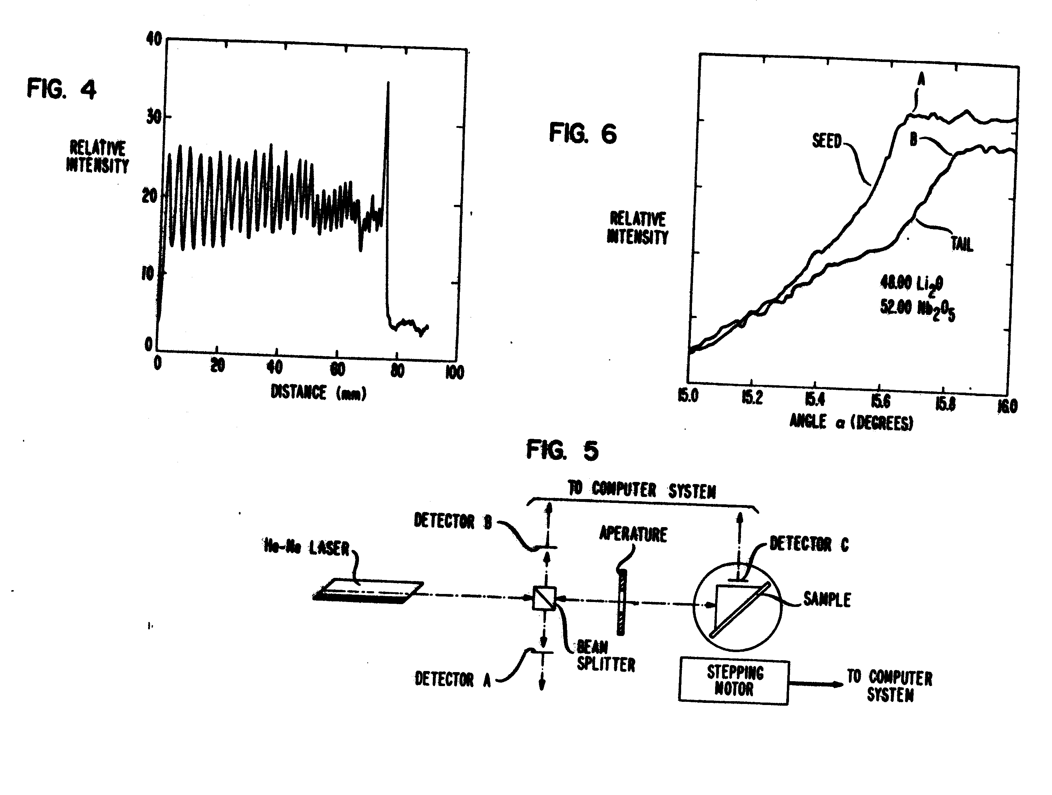

The various parameters, listed above, are chosen so that the difference in the refractive indices seen by the harmonics (and thus the angular separation between the harmonics) is small enough to permit the harmonics to interact with one another. During this interaction, a variation in the refractive index seen by either the bound or free wave will result in a relative phase shift, which will produce, for example, a constructive or destructive interference between the harmonics. Thus, by scanning the incident beam 40 along the surface 20 of the substrate 10 while detecting the intensity of the light of frequency $2\omega$ exiting from the surface 30, an intensity-interference pattern is obtained indicative of the refractive index uniformity of the substrate. In the case of, for example, a gradient in refractive index, the resulting intensity pattern is typically sinusoidal (see, e.g., FIG. 4), with the frequency of the sinusoid increasing as the magnitude of the gradient increases. By, for example, comparing the intensity pattern produced by a sample having a known refractive index gradient against the pattern produced by a sample of unknown gradient, the unknown gradient is readily determined.

Not all refractive index differences (between the harmonics 50 and 60) resulting in interactions are useful. That is, to prevent substrate thickness variations from significantly affecting the phase differences between the harmonics, and thus the detected interference pattern, it has been found that the difference between the refractive indices, $\Delta n$, seen by the harmonics should satisfy the requirement:

$$\Delta n \leq \frac{\lambda}{2\Delta l} \cdot \qquad\qquad (1)$$

Here $\lambda$ is the wavelength of the incident light (in units of, for example, micrometers ($\mu m$)), while $\Delta l$ denotes the maximum deviation (also in units of $\mu m$) of the surfaces 20 and 30 from the average distance, $\underline{l}$ (see FIG. 1), between these surfaces.

The refractive indices seen by the harmonics produced in a variety of polar, uniaxial, crystalline materials, for different directions and polarizations of the incident light, are listed in tables given in, for example, Walter C. McCrone et al, The Particle Atlas, Second Edition (Ann Arbor Science Publishers, Inc., Ann Arbor, Michigan, 1973), Table IV. If not listed, the refractive indices are readily measured using conventional techniques described in, for example, W. L. Bond, "Measurement of the Refractive Indices of Several Crystals," Journal of Applied Physics, 36, page 1674 (1965). Thus, a choice of the parameters (discussed above), which permit the requirement given in Equation (1) to be satisfied, is readily made.

Although not essential to the invention, the surfaces 20 and 30 are preferably substantially flat and substantially parallel to one another. In the case of, for example, a wafer cut from a boule, the surfaces 20 and 30 are preferably the upper and lower surfaces of the wafer which are normally lapped and polished to flat parallelism during the fabrication process. In the case of a cylindrical boule, the surfaces 20 and 30 are, for example, strip-like surfaces extending along the length of the boule. Such strip-like surfaces are readily formed using conventional lapping and/or grinding techniques. These substantially parallel surfaces are advantageous because the $\Delta l$'s associated with such surfaces are relatively small, and thus the $\Delta n$'s permitted by Equation (1) are relatively large.

It should be noted that interactions between the fundamental and the free wave 60 are not detectable (by conventional optical techniques) in the above-described intensity patterns because the needed spatial resolution is smaller than the wavelength of the incident light. However, the fundamental and the free wave can, in a sense, be made to produce a readily detectable interaction by impinging the fundamental and the free wave, after they emerge from the substrate 10, onto another material region having nonlinear optical properties. The impinging fundamental (if its intensity is high enough) will generate a new bound wave (as well as a new free wave). If the differences in the refractive indices seen by the new bound wave and the old free wave is small enough, then these waves will generate a readily (optically) detectable intensity pattern. In fact, if the material region (having nonlinear optical properties) has a known refractive index variation, then the intensity pattern produced by the interactions between the new bound wave and the old free wave can be used to determine the refractive index uniformity of the substrate 10.

The second optical technique is depicted in FIG. 2. As shown, a prism 70, e.g., a titanium oxide prism, is placed on the surface 20 of the substrate 10. This prism should have a higher refractive index than the substrate index (e.g., $n_o$ or $n_e$) to be measured. Further, the surface 20 is preferably optically flat. In operation, a beam of light 40 is impinged upon a first surface 72 of the prism 70, where it is refracted to impinge upon, and be reflected from, the substrate surface 20. The reflected light is again refracted at a second surface 74 of the prism 70, where its intensity is detected by a photodetector 80. By varying the angle of incidence, $\alpha$, of the light beam 40 relative to a normal to the surface 72 of the prism 70, an incidence angle is readily achieved at which, rather than being reflected from the substrate surface 20, the light beam 40 is coupled into the substrate surface. The incidence angle at which this occurs is readily detectable as a sharp break in the intensity of the reflected light detected by the detector 80 (see, e.g., FIG. 6). This break angle is related to the refractive index, $\underline{n}$, of the substrate 10 (in the vicinity of the substrate surface 20).

The refractive index of the substrate 10 which is sampled with the above-described technique is either $n_o$ or $n_e$, depending on the direction and polarization orientation of the incident light, and the impinged crystallographic surface. By repeating the technique at a plurality of points along the surface 20, a pattern of break angles is readily obtained. By comparing this pattern against a pattern obtained from a substrate having a known refractive index uniformity, the degree of uniformity in $n_o$ or $n_e$ in the substrate under investigation is readily determined.

It has been found that the refractive index, $\underline{n}$ ( $n_o$ or $n_e$), of the substrate 10 is well approximated by the relation:

$$n = \sin\alpha_b \cdot \cos\beta + (n_p^2 - \sin^2\alpha_b)^{1/2}\sin\beta \cdot (2)$$

In Equation (2), $n_p$ denotes the refractive index of the prism (which depends on the polarization orientation, e.g., TE or TM, of the incident light) , $\beta$ denotes the prism angle (see FIG. 2), and $\alpha_b$ denotes the break angle. Thus, by using Equation (2), the $n_o$ and $n_e$ at the various points along the substrate surface 20 are readily determined, and therefore the degree of refractive index uniformity is readily determined, without reference to known break angle patterns.

Example 1

Two lithium niobate boules were drawn from a 48.00 mole percent $Li_2O$-52.00 mole percent $Nb_2O_5$ liquid melt. Each boule was cylindrical in shape, had a diameter of 1.8 centimeters (cm), and a length of 9.0 cm. Moreover, the longitudinal axis of each boule, hereafter denoted the z-axis, was the optic axis.

The compositional homogeneity of the first boule was destructively determined, i.e., the boule was cut up into samples (the cuts made perpendicularly to the z-axis), and the chemical composition of each sample was inferred from its Curie temperature, measured using differential thermal analysis techniques. As a result, it was determined that the mole ratio of lithium oxide to niobium oxide ranged from 0.934 at the seed end of the boule to 0.927 at the tail end. From previous experience, it was known that such a compositional gradient would yield so large a gradient in $n_e$ as to make this boule undesirable for device purposes.

The compositional homogeneity of the second boule (which was the same as that of the first boule) was determined using the first optical technique, described above. In this regard, two parallel, strip-like, optical windows were ground and polished along the length of the boule. The width of each window was 1 cm. On the basis of previous experience with these polishing techniques, it was estimated that the windows deviated from parallelism by no more than about 10 $\mu$m.

The apparatus used to generate harmonics in the second boule, and to detect the intensity of the harmonics exiting the second boule, is schematically depicted in FIG. 3. That is, as shown, light pulses incident on the second boule were emitted by a "Q"-switched Nd-doped YAG laser. The wavelength and duration of each pulse were, respectively, 1.06 $\mu$m and 300 nanoseconds. The energy in each pulse was 1 millijoule, the beam diameter was 1 millimeter, while the repetition rate was 1000 pulses per second.

The lithium niobate boule was mounted on an adjustable table. During operation, the table permitted one of the polished windows of the boule to be kept normal to the laser beam, the polarization of the laser beam was perpendicular to the z-axis, and the boule was translated parallel to the z-axis.

For the laser beam direction, and polarization orientation, given above, and using the method described in W.L. Bond, supra, it follows that the difference in the refractive indices seen by the resulting bound and free waves was 0.0025, which satisfies the requirement of Equation (1).

As shown in FIG. 3, the green, harmonic light exiting the second window of the boule was separated from the infrared fundamental by a harmonic beam splitter. The infrared light was absorbed by a fire brick. By contrast, the separated harmonic green light was filtered by both a glass filter and an interference filter, before being detected by a photovoltaic photodiode operated in the reverse bias mode.

The measured harmonic intensity, as a function of distance along the z-axis of the second boule, is shown in FIG. 4. As is evident, the intensity varies sinusoidally with distance. The relatively high frequency of the sinusoid implies a relatively large gradient in refractive index ($n_e$), which is consistent with the relatively large compositional gradient associated with the first boule.

Example 2

A third lithium niobate boule was drawn from a 48.00 mole percent $Li_2O$-52.00 mole percent $Nb_2O_5$ liquid melt. This boule was cylindrical in shape, had a diameter of 1.8 cm, and a length of 9 cm.

The refractive index homogeneity of the third boule was determined using the second optical technique, described above. In preparation for this determination, a strip-like, optically flat window, having a width of about 1 cm, was polished along the length of the boule.

The apparatus employed is depicted in FIG. 5. As shown, this apparatus included a $TiO_2$ prism with a $\beta$ angle (see FIG. 2) of 45 degrees and an optically flat base. During the measurement procedure, the base of the prism was placed on the polished window of the boule, at various positions along the length of the boule.

The prism and boule were mounted in a sample holder on an adjustable table. The table was attached to a polar rotation stage which was driven by a stepping motor. The polar rotation stage rode on translator stages which positioned the prism and boule in the path of an impinging light beam. A microcomputer (Model Micro/PDP 11/23, sold by Digital Equipment Corporation of Boston, Massachusetts) controlled the system and determined how far and in what direction the rotator or translators moved.

The light which impinged the prism and boule was produced by a small, single mode He-Ne laser (Model 6697, purchased from the Oriel Corporation of Stamford, Connecticut).

The apparatus also included a beam splitter and three detectors, labeled A, B, C in FIG. 5. Each of the detectors was a 7 mm x 7 mm voltaic photodiode purchased from the Hamamatsu Corporation of Middlesex,

6

0 220 935

New Jersey. During the measurement procedure, detector A was used to monitor the light intensity from the laser, i.e., the beam splitter reflected a portion of the light emitted by the laser to detector A. The light transmitted by the beam splitter to the prism, and reflected by the prism, was detected with detector B. The light refracted by the prism and reflected from the (ground and polished) boule window was detected with detector C.

A portion of the measured results, i.e., laser beam incidence angle, $\alpha$, versus relative intensity of light reflected from the boule, for the seed and tail portions of the boule, is depicted in FIG. 6. The break angle for the seed portion is labeled "A", while the break angle for the tail portion is labeled "B". As shown, there is a significant difference in break angles between the seed and tail portions, which denotes a refractive index gradient along the length of the boule. From previous experience, it is known that this gradient is so large as to make the boule unsuitable for device fabrication.

**Claims**

1. A method for fabricating an integrated optical device, comprising the steps of: forming at least one waveguide in a substrate which includes polar, uniaxial crystalline material, said material exhibiting ordinary and extraordinary refractive indices, and completing the fabrication of said device, CHARACTERIZED IN THAT the maximum deviation of said ordinary refractive index or of said extraordinary refractive index or of both of said indices throughout at least a portion of said substrate, from a corresponding desired value or desired values is less than about 0.01 percent.

2. The method according to claim 1, CHARACTERIZED IN THAT said maximum deviation is less than or equal to about 0.005 percent.

3. The method according to claim 1, CHARACTERIZED IN THAT said material includes lithium niobate.

4. The method according to claim 1, CHARACTERIZED BY determining said maximum deviation by nondestructively measuring a refractive index profile in at least a portion of said substrate prior, or subsequent, to said forming step, said forming and/or completing steps taking place only if said measured profile meets a desired criterion.

5. The method according to claim 4, CHARACTERIZED IN THAT said measuring step includes the steps of impinging a beam of electromagnetic radiation upon said substrate, said beam including electromagnetic radiation of frequency $\omega$ and of sufficient power to induce the formation of harmonics of frequency $2\omega$ within said substrate, and
detecting the intensity of electromagnetic radiation of frequency $2\omega$ exiting said substrate.

6. The method according to claim 4,
CHARACTERIZED IN THAT
said measuring step includes the steps of impinging upon said substrate a beam of electromagnetic radiation, and detecting the intensity of the electromagnetic radiation reflected from said substrate.

7. The method according to claim 1,
CHARACTERIZED BY
determining said maximum deviation by
nondestructively measuring the uniformity of a refractive index in at least a portion of a boule which includes said polar, uniaxial crystalline material, and subsequently excising a portion of said boule to be used as the substrate in which is formed said at least one waveguide,
said subsequent excising, forming and completing steps taking place only if said measured uniformity is at least equal to a desired uniformity.

8. The method according to claim 7,
CHARACTERIZED IN THAT
measuring step includes the steps of impinging a beam of electromagnetic radiation upon said boule, said beam including electromagnetic radiation of frequency $\omega$ and of sufficient power to induce the formation of harmonics of frequency to $\omega$ within said boule, and
detecting the intensity of electromagnetic radiation of frequency $2\omega$ exiting said boule.

9. The method according to claim 7,
CHARACTERIZED IN THAT
said measuring step includes the steps of impinging upon said boule a beam of electromagnetic radiation and detecting the intensity of the electromagnetic radiation reflected from said boule.

10. The method according to claim 1,
CHARACTERIZED BY
selecting a representative sample of a plurality of boules prior to excising a portion of material, to be used as the substrate, from any one of a given plurality of boules, each of the boules of said plurality including said polar, uniaxial crystalline material; and
nondestructively measuring the uniformity of a refractive index in at least a portion of each of the boules of said representative sample prior to said excising step, said excising, forming and completing steps taking place only if the measured uniformity of each of the boules of said representative sample is at least equal to a desired uniformity.

7

11. A method according to claim 1,
CHARACTERIZED BY
selecting a representative sample of a given plurality of substrates prior, or subsequent, to said forming step; and
nondestructively measuring a refractive index profile in at least a portion of each of the substrates of said representative sample, said forming and/or completing steps taking place only if the measured profiles of said representative sample meet a desired criterion.

FIG. 1

FIG. 2

FIG. 3

FIG. 4

RELATIVE INTENSITY

40

30

20

10

0

0    20    40    60    80    100

DISTANCE (mm)

FIG. 6

RELATIVE INTENSITY

A

SEED

B

TAIL

48.00 Li$_2$O
52.00 Nb$_2$O$_5$

15.0    15.2    15.4    15.6    15.8    16.0

ANGLE α (DEGREES)

FIG. 5

TO COMPUTER SYSTEM

DETECTOR B

APERATURE

DETECTOR C

He-Ne LASER

SAMPLE

DETECTOR A

BEAM SPLITTER

STEPPING MOTOR

TO COMPUTER SYSTEM